# DEMANDE DE BREVET EUROPEEN

(11) **EP 1 178 246 A1**
(43) Date de publication de la demande: **06.02.2002**
(21) Numéro de dépôt: 01402076.2
(22) Date de dépôt: 01.08.2001
(51) Int. Cl.: F16H 61/32

(54) **Dispositif et procédé de commande d'une boîte de vitesses**

(30) Priorité: 01.08.2000 FR 0010105; 01.08.2000 FR 0010106
(71) Demandeur: Renault, 92100 Boulogne Billancourt (FR)
(72) Inventeur: Dal, Arnaud, 78000 Versailles (FR); Coffe, Guillaume, 75015 Paris (FR); Ripoll, Christophe, 78220 Viroflay (FR)

(57) **Abrégé**

Dispositif de commande d'une boîte de vitesses mécanique pourvue d'au moins deux arbres et de pièces mobiles pour engager les différents rapports de transmission, comprenant un moyen de passage de vitesses 1 alimenté en énergie électrique, un moyen de sélection 2 des vitesses alimenté en énergie électrique, une unité de commande 11 desdits moyens, un moyen de détection 9 d'une variable Cₚ représentative du couple exercé par le moyen de passage, un moyen de détection 10 d'une variable Cₛ représentative du couple exercé par le moyen de sélection, un moyen de calcul de la position d'un doigt de commande de pièces mobiles à partir desdites variables Cₚ et Cₛ et un moyen d'actionnement simultané du moyen de passage et du moyen de sélection.

## Description

L'invention concerne le domaine des boîtes de vitesses pour véhicules automobiles et de leur dispositif de commande.

De façon connue, une boîte de vitesses de véhicule automobile comprend au moins deux arbres parallèles longitudinaux primaire et secondaire, du type comprenant au moins deux engrenages dans chacun desquels un pignon fou, monté à rotation sur le premier arbre, engrène avec un pignon fixe porté par le deuxième arbre et du type comprenant des moyens de crabotage de chaque pignon fou sur son arbre par l'intermédiaire de bagues coaxiales mobiles axialement, sous l'action de moyens de commande comprenant des fourchettes de commande qui sont montées coulissantes parallèlement aux arbres. Chaque fourchette est munie d'un pied transversal à l'extrémité duquel est agencée une touche de contact, les touches étant alignées transversalement suivant un arc de cercle pour être reçues dans une fourche d'un actionneur qui est susceptible d'être commandé en déplacement transversal suivant un arc de cercle pour sélectionner une fourchette associé à un rapport de démultiplication, et parallèlement aux arbres pour engager le rapport associé à la fourchette sélectionnée en déplaçant longitudinalement une bague de crabotage du pignon fou correspondant à ce rapport.

On connaît de nombreuses boîtes de vitesses comportant des moyens de commande pour le crabotage de pignons fous sur les arbres qui les portent, pour provoquer leur engrènement avec des pignons fixes associés appartenant à au moins un autre arbre et engager ainsi sélectivement des rapports de démultiplication déterminés associés auxdits pignons fous.

Les boîtes de vitesses pour automobiles font conventionnellement appel à des dispositifs de crabotage à synchroniseurs du type de ceux précédemment évoqués. Les synchroniseurs sont susceptibles d'être déplacés axialement par des fourchettes, portées par des axes, et susceptibles d'être actionnées longitudinalement par le conducteur du véhicule à l'aide d'un levier de changement de vitesses disposé à l'intérieur de l'habitacle du véhicule. Dans le cas d'une boîte de vitesses dite "manuelle", le levier de changement de vitesses actionne une tringlerie qui agit directement sur les fourchettes, et dans le cas d'une boîte de vitesses dite "robotisée" ou à commande automatisée, le levier de changement de vitesses commande indirectement le déplacement des fourchettes, notamment par l'intermédiaire de vérins ou d'autres types d'actionneurs. Un tel dispositif est décrit dans le document FR A 2 609 138.

Ce document décrit plus particulièrement une architecture de boîte de vitesses automatisée, dans laquelle le crabotage des pignons fous sur leur arbre et le déplacement des synchroniseurs parallèlement à cet arbre est réalisé par des fourchettes dont le déplacement en translation est commandé par des actionneurs, par l'intermédiaire de touches de commande solidaires de tiges traversant le carter de la boîte de vitesses. Chaque fourchette est déplacée par un actionneur associé. Cette disposition est particulièrement encombrante car elle nécessite un nombre important de fourchettes, d'axes de fourchettes et d'actionneurs.

La commande d'une boîte de vitesses automatisée à passage de vitesses à interruption de couple nécessite un moteur, une pompe, un accumulateur, un distributeur hydraulique, au moins deux vérins hydrauliques, au moins deux électrovannes proportionnelles, et au moins deux électrovannes tout ou rien.

L'invention propose un dispositif de commande de boîtes de vitesses particulièrement rapide.

L'invention propose un dispositif de commande optimale de boîtes de vitesses.

Le dispositif, selon un aspect de l'invention, est destiné à la commande d'une boîte de vitesses mécanique pourvue d'au moins deux arbres et de pièces mobiles pour engager les différents rapports de transmission. Le dispositif comprend un moyen de passage de vitesses alimenté en énergie électrique, un moyen de sélection des vitesses alimenté en énergie électrique, et une unité de commande desdits moyens. Le dispositif comprend, en outre, un moyen de détection d'une variable Cₚ représentative d'un effort exercé par le moyen de passage, un moyen de détection d'une variable Cₛ représentative d'un effort exercé par le moyen de sélection, un moyen de calcul de la position d'un doigt de commande de pièces mobiles à partir desdites variables Cₚ et Cₛ et un moyen d'actionnement simultané du moyen de passage et du moyen de sélection.

De préférence, la variable Cₚ est un courant électrique consommé par le moyen de passage et que la variable Cₛ est un courant électrique consommé par le moyen de sélection.

L'invention propose également une boîte de vitesses équipée d'un dispositif tel que ci-dessus.

L'invention propose également un procédé de commande d'une boîte de vitesses mécanique pourvue d'au moins deux arbres et de pièces mobiles pour engager les différents rapports de transmission, dans lequel:
on détecte une variable Cₚ représentative d'un effort exercé par un moyen de passage de vitesses,
on détecte une variable Cₛ représentative d'un effort exercé par un moyen de sélection des vitesses,
on calcule la position d'un doigt de commande de pièces mobiles à partir desdites variables Cₚ et Cₛ, et
on actionne simultanément le moyen de passage et le moyen de sélection pour diminuer la durée d'un changement d'un rapport de vitesses à un autre.

Avantageusement, la variable Cₚ est un courant électrique consommé par le moyen de passage et la variable Cₛ est un courant électrique consommé par le moyen de sélection.

Dans un mode de réalisation de l'invention, l'actionnement simultané du moyen de passage et du moyen de sélection a lieu lors d'un changement d'un rapport de vitesses requérant le passage d'une fourchette au point mort.

Dans un mode de réalisation de l'invention, l'actionnement simultané du moyen de passage et du moyen de sélection a lieu lors d'une phase de décrabotage.

Dans un mode de réalisation de l'invention, l'actionnement simultané du moyen de passage et du moyen de sélection a lieu lors d'une phase de sélection.

L'invention concerne également un programme d'ordinateur comprenant des moyens de code programme pour mettre en oeuvre les étapes du procédé, lorsque ledit programme fonctionne sur un ordinateur.

L'invention concerne également un support capable d'être lu par un dispositif de lecture de moyens de code programme qui s'y trouvent stockés et qui sont aptes à la mise en oeuvre des étapes du procédé, lorsque ledit programme fonctionne sur un ordinateur.

Le moyen de passage de vitesses et le moyen de sélection des vitesses peuvent comprendre, chacun, un moteur électrique, un vérin émetteur entraîné par le moteur électrique et un actionneur hydraulique alimenté par le vérin émetteur.

Alternativement, le moyen de passage de vitesses et le moyen de sélection des vitesses peuvent comprendre, chacun, un vérin électrique. L'effort exercé peut être un couple.

Le dispositif, selon un aspect de l'invention, est destiné à la commande d'une boîte de vitesses mécanique pourvue d'au moins deux arbres et de pièces mobiles pour engager les différents rapports de transmission. Le dispositif comprend un moyen de passage de vitesses alimenté en énergie électrique, un moyen de sélection des vitesses alimenté en énergie électrique, et une unité de commande desdits moyens. Le dispositif comprend, en outre, un moyen de détermination d'un état de la boîte de vitesses à partir d'informations relatives à la variation de variables électromagnétiques des moyens d'actionnement, et un moyen d'estimation de la position d'au moins une pièce mobile à partir de la variation desdites variables électromagnétiques.

De préférence, le dispositif comprend un capteur du courant consommé par chaque actionneur, et un capteur de la tension aux bornes de chaque actionneur, lesdits capteurs étant reliés à l'unité de **command**e.

L'invention propose également une boîte de vitesses équipée d'un dispositif tel que ci-dessus.

L'invention propose également un procédé de commande d'une boîte de vitesses mécanique pourvue d'au moins deux arbres et de pièces mobiles pour engager les différents rapports de transmission, dans lequel on détermine un état de la boîte de vitesses à partir d'informations relatives à la variation de variables électromagnétiques des moyens d'actionnement, et on estime la position d'au moins une pièce mobile à partir de la variation desdites variables électromagnétiques.

Avantageusement, on diminue la vitesse de déplacement d'au moins une pièce mobile dans une zone de synchronisation.

Dans un mode de réalisation de l'invention, lors d'un déplacement d'un axe de commande de pièce mobile dans une zone de synchronisation, une augmentation brusque du courant consommé par un moyen d'actionnement de sélection correspond au début d'une phase de synchronisation.

Dans un mode de réalisation de l'invention, après ladite augmentation brusque du courant, une augmentation brusque de la tension aux bornes du moyen d'actionnement de sélection correspond à la fin de la phase de synchronisation.

Dans un mode de réalisation de l'invention, lors d'un déplacement d'un axe de commande de pièce mobile dans une zone de fin de course, une augmentation brusque du courant consommé par un moyen d'actionnement de sélection correspond à la fin du déplacement.

Avantageusement, on diminue la vitesse de déplacement d'au moins une pièce mobile dans une zone de fin de course.

L'invention concerne également un programme d'ordinateur comprenant des moyens de code programme pour mettre en oeuvre les étapes du procédé, lorsque ledit programme fonctionne sur un ordinateur.

L'invention concerne également un support capable d'être lu par un dispositif de lecture de moyens de code programme qui s'y trouvent stockés et qui sont aptes à la mise en oeuvre des étapes du procédé, lorsque ledit programme fonctionne sur un ordinateur.

Le moyen de passage de vitesses et le moyen de sélection des vitesses peuvent comprendre, chacun, un moteur électrique, un vérin émetteur entraîné par le moteur électrique et un actionneur hydraulique alimenté par le vérin émetteur.

Alternativement, le moyen de passage de vitesses et le moyen de sélection des vitesses peuvent comprendre, chacun, un vérin électrique. L'effort exercé peut être un couple.

La présente invention sera mieux comprise à l'étude de la description détaillée de quelques modes de réalisation pris à titre d'exemples nullement limitatifs et illustrés par les dessins annexés, sur lesquels :
la figure 1 est une vue schématique d'une commande de boîte de vitesses; et
la figure 2 est un chronogramme de la commande de boîte de vitesses.
la figure 3 est un schéma fonctionnel de la commande de boîte de vitesses;
la figure 4 est un schéma de détail de la figure 3 ; et
la figure 5 est un chronogramme de la commande de boîte de vitesses.

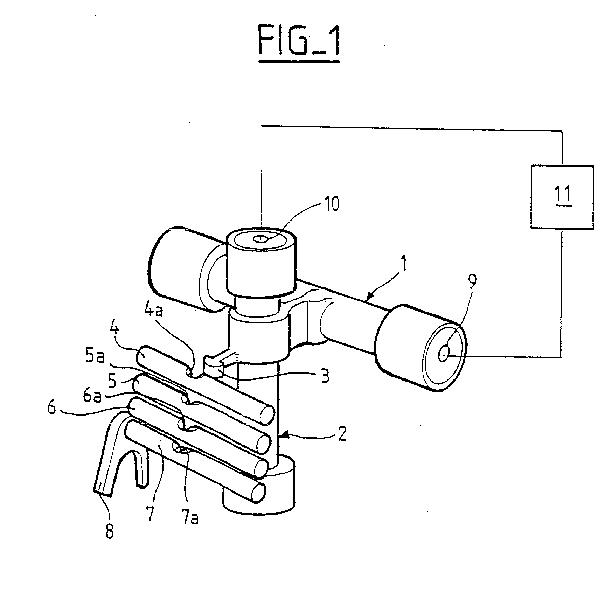

Comme on peut le voir sur la figure 1, un dispositif de commande de boîte de vitesses comprend un actionneur 1 dit "de passage de vitesses", un actionneur 2 dit "de sélection de vitesses" et un doigt de commande 3. L'actionneur 1 provoque la rotation du doigt 3 autour d'un axe vertical sur la figure 1, autrement dit parallèle à l'axe de l'actionneur 2. L'actionneur 2 provoque le déplacement en translation du doigt 3 selon son axe. Les vérins 1 et 2 sont mutuellement perpendiculaires.

Le doigt 3 est prévu pour coopérer avec une pluralité d'axes de commande, dans le cas illustré quatre. Les axes de commande référencés 4 à 7 sont parallèles et disposés les uns au-dessus des autres. Chaque axe 4 à 7 présente une encoche 4a à 7a de forme concordante avec le doigt 3. Dans le cas illustré, le doigt 3 est en position pour coopérer avec l'encoche 4a de l'axe 4. Toutefois, pour la clarté de la figure, on a légèrement éloigné les axes 4 à 7 du doigt 3. En fait, le doigt 3 est en saillie dans l'encoche 4a.

La commande de l'actionneur 1 provoquant la rotation du doigt 3 entraîne l'axe 4 en déplacement en translation longitudinale. Chaque axe 4 à 7 est ainsi apte à être déplacé longitudinalement par le doigt 3 selon la position en translation du doigt 3 déterminée par la commande de l'actionneur 2. Chaque axe 4 à 7 se termine par une fourchette. Ici, on n'a représenté que la fourchette 8 d'extrémité de l'axe 7 pour actionner les crabots ou les synchros d'une boîte de vitesses non représentée.

Les actionneurs 1 et 2 peuvent être de type électrique ou électro-hydraulique. Chaque actionneur est pourvu d'un ou associé à un moteur électrique. Un capteur 9, 10 de mesure du courant électrique consommé est monté sur chaque actionneur 1, 2.

On prévoit un calculateur 11 apte à gérer la commande des différents éléments tels que les actionneurs 1 et 2. Le calculateur 11 sera relié aux capteurs 9, 10 pour recevoir une information relative au courant consommé par chaque actionneur 1, 2. Le calculateur 11 comprend au moins une mémoire, au moins un microprocesseur, au moins un bus de communication entre mémoire et microprocesseur, et au moins un programme de commande stocké en mémoire et pouvant être exécuté par le microprocesseur. Le calculateur de commande de la boîte de vitesses sera associé au calculateur de gestion du moteur.

Pour un changement de vitesses avec changement de ligne ou d'axe, par exemple passage de seconde en troisième ou de troisième en cinquième et vice-versa ou avec des sauts de vitesses, la fourchette correspondante doit être amenée jusqu'au point mort, puis le doigt de commande doit être placé dans le nouveau crabot de fourchette, enfin la nouvelle fourchette peut ensuite continuer sa course jusqu'à la synchronisation. Les phases ultérieures sont identiques à celles d'un changement de vitesses direct.

En se référant à la figure 1, en supposant que l'axe 4 était en position d'engagement, le doigt 3 doit tout d'abord ramener l'axe 4 en position de point mort, puis se déplacer vers le bas, par exemple jusqu'à la position de coopération avec l'axe 7 de la fourchette 8, pour enfin amener l'axe 7 et la fourchette 8 dans la position du rapport de vitesses souhaitée.

Pour déterminer le passage au point mort, l'unité de commande 11 envoie un ordre au moteur électrique de l'actionneur de sélection 2 pour lui faire exercer, lors de la demande de changement de rapport de vitesses et lors du décrabotage, un léger couple constant sur le doigt de commande 3 et ceci avant le passage au point mort. Tant que le point mort n'est pas atteint, le doigt de commande 3 ne peut bouger du crabot de fourchette dans lequel il se trouve. Le rotor du moteur de l'actionneur de sélection 2 reste donc bloqué.

Lorsque le doigt de commande 3 est amené au point mort, il peut enfin se déplacer sous l'effort exercé par le moteur électrique de l'actionneur de sélection. Le rotor du moteur est donc libéré. On décèle alors une chute du courant consommé par ledit moteur électrique. De façon similaire, dès que le mouvement de l'actionneur de sélection 2 a commencé, tout mouvement de l'actionneur de passage 1 se trouve bloqué. On peut détecter alors une brusque augmentation du courant de l'actionneur de passage 1. On parvient ainsi à déterminer le lieu du point mort.

Avant que le doigt de commande 3 n'ait été complètement placé dans un nouveau crabot de fourchette, l'unité de commande 11 provoque l'injection dans le moteur électrique de l'actionneur de passage 1 d'un courant, de façon que ledit actionneur 1 exerce un léger effort permanent. Ainsi, lorsque le mouvement de sélection sera complètement achevé, l'actionneur de passage 1 pourra à nouveau se déplacer et provoquer le déplacement de l'axe correspondant au nouveau rapport de vitesses sélectionné. Une fois le point mort dépassé, le doigt de commande 3 est bloqué dans le sens de la sélection. Le courant électrique consommé par le moteur électrique de l'actionneur de sélection 2 augmente alors brutalement. On considère que la sélection est terminée. Cette hausse du courant indique la fin de cette étape à l'unité de commande 11. Dans le cas de la sélection des axes extrêmes, par exemple 4 et 7 sur la figure 1, le pilotage est relativement plus aisé car on peut prévoir des butées mécaniques qui provoquent également une hausse brutale du courant consommé par l'actionneur de sélection 2.

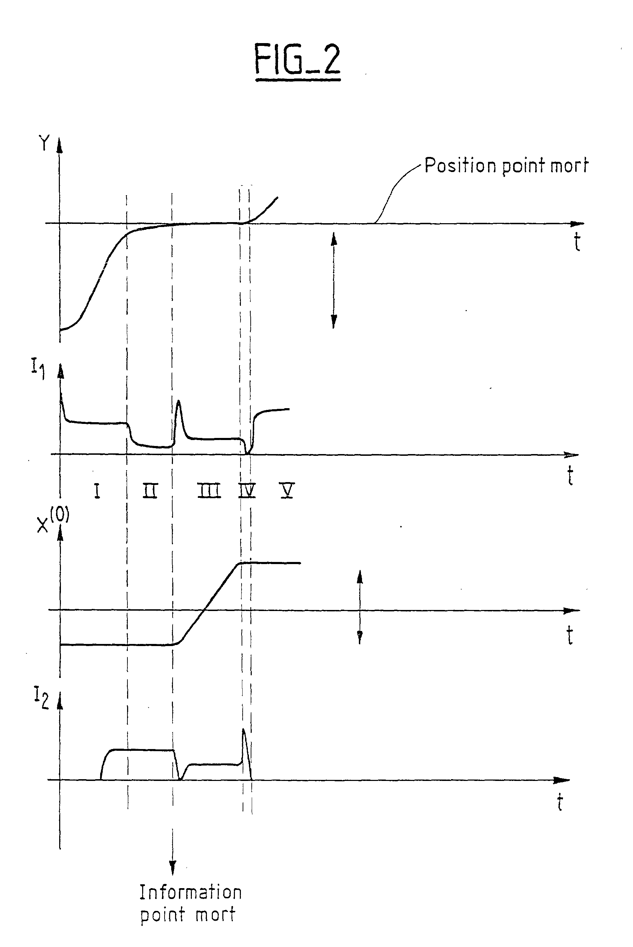

Les courbes de la figure 2 ont en abscisse le temps et en ordonnée pour la première la position Y du doigt de commande selon le mouvement de passage, pour la seconde le courant consommé par l'actionneur de passage 1, pour la troisième la position X du doigt de commande selon le déplacement de sélection, et pour la quatrième 1e courant consommé par l'actionneur de sélection 2. A l'instant zéro, l'unité de commande 11 reçoit une demande de changement de vitesses avec changement de ligne, autrement dit d'axe de commande.

Lors de la phase I, l'unité de commande 11 impose une consigne de vitesse élevée pour déplacer rapidement le doigt de commande au moyen de l'actionneur de passage 1. Le courant I₁ consommé par l'actionneur de passage 1 présente initialement une pointe liée au démarrage, puis se stabilise autour d'une valeur relativement élevée pour entraîner l'actionneur 1 à la vitesse demandée. Le doigt de commande 3 ne peut pas sortir de son crabot de fourchette. Le mouvement de l'actionneur de sélection 2 est bloqué. L'unité de commande 11 demande à l'actionneur de sélection 2 d'exercer un léger effort. Le courant I₂ de l'actionneur de sélection 2 se stabilise autour d'une certaine valeur.

Au cours de la phase II, le doigt de commande 3 approche de la zone de point mort. L'unité de commande 11 commande un fort ralentissement du doigt de commande avant son entrée dans cette zone. Le courant I₁ est donc fortement diminué. La vitesse de déplacement de passage décroît et devient inférieure à une vitesse prédéterminée, d'environ 0,1 m∗s⁻¹.

En phase III, le doigt de commande a atteint le point mort. La précontrainte exercée par l'actionneur de sélection 2 permet maintenant au doigt de commande 3 de se déplacer vers un nouveau crabot de fourchette : c'est le mouvement de sélection. Au début de ce déplacement, le courant I₂ dans l'actionneur de sélection 2 chute. A l'inverse, l'actionneur de passage 1 est bloqué, d'où une pointe du courant I₁. Ces deux informations fournissent à l'unité de commande 11 une indication de passage au point mort. L'unité de commande 11 demande alors à l'actionneur de passage 1 d'exercer une légère précontrainte, d'où le maintien du courant I₁ à une certaine valeur non nulle.

En phase IV, le doigt de commande 3 s'est déplacé jusqu'au nouveau crabot de fourchette. Le mouvement de sélection est alors terminé. Le déplacement de l'actionneur de passage 1 est libéré, d'où une reprise de ce mouvement. Le point mort est dépassé. L'actionneur de sélection 2 est bloqué, d'où une augmentation brusque du courant I₂. L'unité de commande 11 commande alors l'annulation du courant I₂ dans l'actionneur de sélection 2. L'étape de passage de vitesses se poursuit normalement avec un courant I₁ à une certaine valeur non nulle pour entraîner le déplacement de l'axe de commande correspondant, voir phase V.

Ainsi, on prévoit de doter chaque actionneur d'un moyen de mesure du courant qu'il consomme et d'envoyer une information de courant mesuré à l'unité de traitement. Le moyen de mesure du courant peut être un capteur monté sur un actionneur proprement dit, ou sur une alimentation électrique de l'actionneur. L'information de courant mesuré peut être fournie par l'alimentation électrique pourvue d'une sortie à cet effet. L'unité de traitement ou calculateur analyse l'information de courant mesuré relative à chaque actionneur pour en déduire l'instant de point mort. Plus précisément, l'instant de point mort est indiqué par un pic du courant I₁ et une chute du courant I₂.

Le principe de détection proposé consiste à effectuer une mesure de position déportée, en d'autres termes à utiliser des capteurs placés en amont des actionneurs, et d'utiliser les informations relatives à des variables électromagnétiques dans les actionneurs électriques pour connaître très précisément les points délicats du changement de vitesses, en particulier les informations de courant et de tension.

On entend ici par "points délicats", les positions du mécanisme de commande où il existe un risque de choc mécanique, ce qui nécessite des vitesses d'accostage faibles, par exemple inférieures à 0,3 m*s-1. Il s'agit, notamment, du passage au point mort lors d'un changement de rapport de vitesses avec changement de ligne (2―>3, 3―>5, 4―>2), du début de synchronisation et des arrivées aux butées mécaniques. La maîtrise des vitesses aux abords de ces points d'accostage permet d'accroître la fiabilité de la boîte de vitesses, la qualité du changement de ligne ou d'axe et le confort acoustique pour le conducteur.

On rappelle ici le fonctionnement général d'un moteur électrique qui entraîne une charge. Lorsque la charge est stoppée par un obstacle fixe, le rotor du moteur électrique est également stoppé. Il s'ensuit une brusque élévation du courant consommé par le moteur électrique. La valeur crête que peut atteindre le courant dépend de la tension d'alimentation. En effet, pour un rotor bloqué avec R la résistance d'induit du moteur, on a Î=U/R.

On cherche donc à utiliser l'information d'élévation brusque du courant pour connaître précisément les instants de début de synchronisation et d'arrivée aux butées mécaniques. Ce type de détection permet une bonne précision de la détection de position en utilisant des capteurs de grandeurs électromagnétiques qui souvent seront déjà présents pour d'autres raisons. Par ailleurs, l'information délivrée par les capteurs de grandeurs électromagnétiques est totalement indépendante des dispersions de fabrication de la boîte de vitesses et de son dispositif de commande, de l'usure mécanique des différents éléments de la boîte de vitesses au cours de sa durée de vie et permet donc une détection fiable et durable du décrabotage, du début de synchronisation, de la fin de synchronisation, du crabotage, du point mort et des butées de commande des actionneurs.

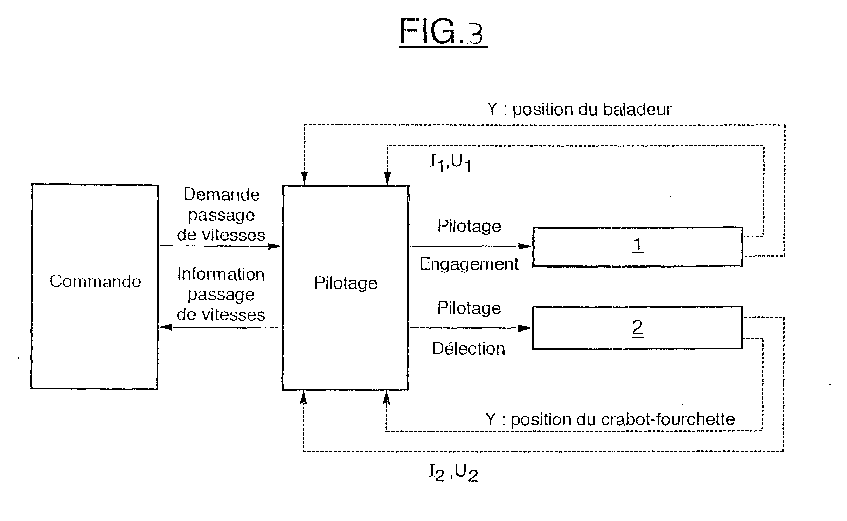

Comme on peut le voir sur la figure 3, un bloc intitulé "pilotage" détermine la phase dans laquelle se trouve la boîte de vitesses et génère alors les commandes appropriées pour les actionneurs 1 et 2. Le bloc de pilotage reçoit en retour une information relative au courant I₁, I₂, consommé respectivement par les actionneurs 1 et 2.

On peut considérer qu'un changement de rapport de vitesses se décompose en plusieurs phases :
- décrabotage,
- déplacement rapide vers la synchronisation,
- ralentissement avant l'entrée dans la zone de synchronisation,
- synchronisation,
- vol libre,
- ralentissement avant une arrivée en butée,
- crabotage.

Le bloc de pilotage possède une entrée par laquelle il reçoit une demande de changement de rapport de vitesses en provenance d'une unité de commande qui peut être connectée à un sélecteur de vitesses à disposition du conducteur et/ou former une unité de commande gérant de façon automatique le changement des rapports de vitesses. Le bloc de pilotage envoie en sortie vers l'unité de commande une information relative au changement de rapport de vitesses effectué et possède au moins deux sorties de commande au moins des actionneurs 1 et 2. Le bloc de pilotage reçoit en retour les informations électriques relatives aux actionneurs 1 et 2, notamment les courants I₁ et I₂ et les tensions U₁ et U₂. Le bloc de pilotage reçoit également une information relative à la position et éventuellement à la vitesse du doigt de commande 3, selon les deux mouvements engendrés respectivement par les actionneurs 1 et 2. Ces deux positions sont notées respectivement X pour la position conférée par l'actionneur 2 et Y pour la position conférée par l'actionneur 1.

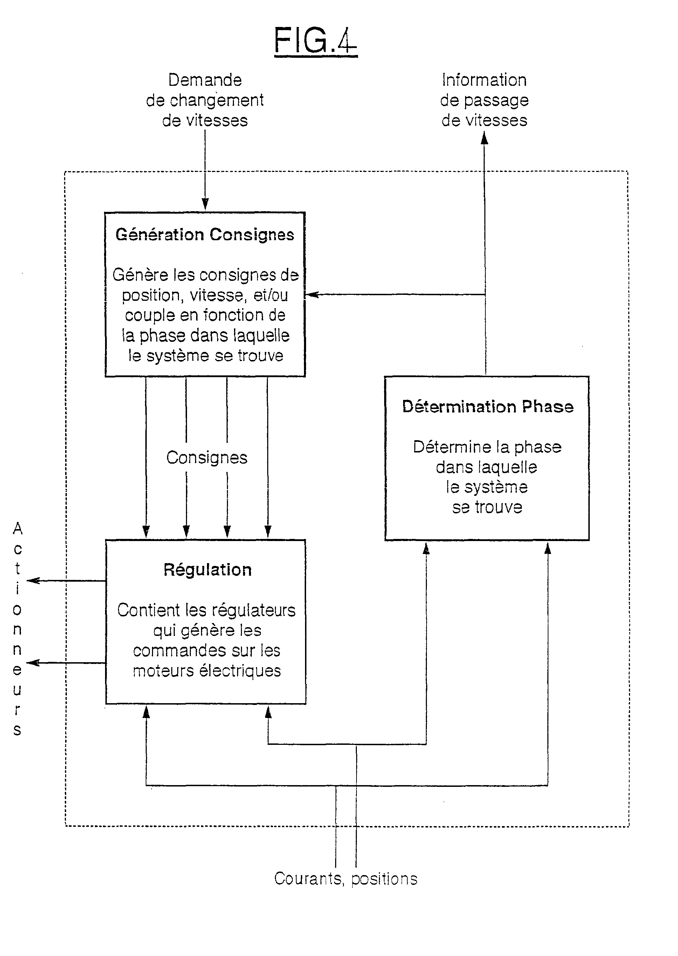

Le bloc de pilotage est illustré de façon plus détaillée sur la figure 4. Un bloc de génération de consigne reçoit en entrée la demande de passage de vitesses en provenance de l'unité de commande ainsi que l'information de passage de vitesses déterminée lors d'un cycle précédent. Le bloc de génération de consigne génère les consignes de position, de vitesse, et/ou de couple des actionneurs en fonction de la phase dans laquelle le système se trouve. Le bloc de génération de consigne émet en sortie une pluralité de consignes qu'il envoie à un bloc de régulation qui peut se présenter sous la forme d'un bloc unique ou, en variante non représentée, d'une pluralité de blocs de régulation dédiés chacun à un actionneur. Le bloc de régulation génère les commandes qui sont envoyées en sortie aux actionneurs 1 et 2. Le bloc de régulation génère les commandes des actionneurs en fonction des consignes reçues du bloc de génération de consigne et en fonction des informations relatives aux variables électromagnétiques des actionneurs telles que le courant et/ou la tension, et aux variables de positions, notamment X et Y.

Le bloc de détermination de phase détermine la phase dans laquelle la boîte de vitesses et la commande se trouvent en fonction des grandeurs électromagnétiques des actionneurs reçues et des positions, notamment X et Y. Les variables électromagnétiques seront en général les courants, notamment I₁ et I₂, et les tensions, notamment U₁ et U₂ qu'il reçoit en entrée. Le bloc de détermination de phase possède une sortie au moyen de laquelle il envoie l'information de passage de vitesses au bloc de génération de consigne et à l'unité de commande.

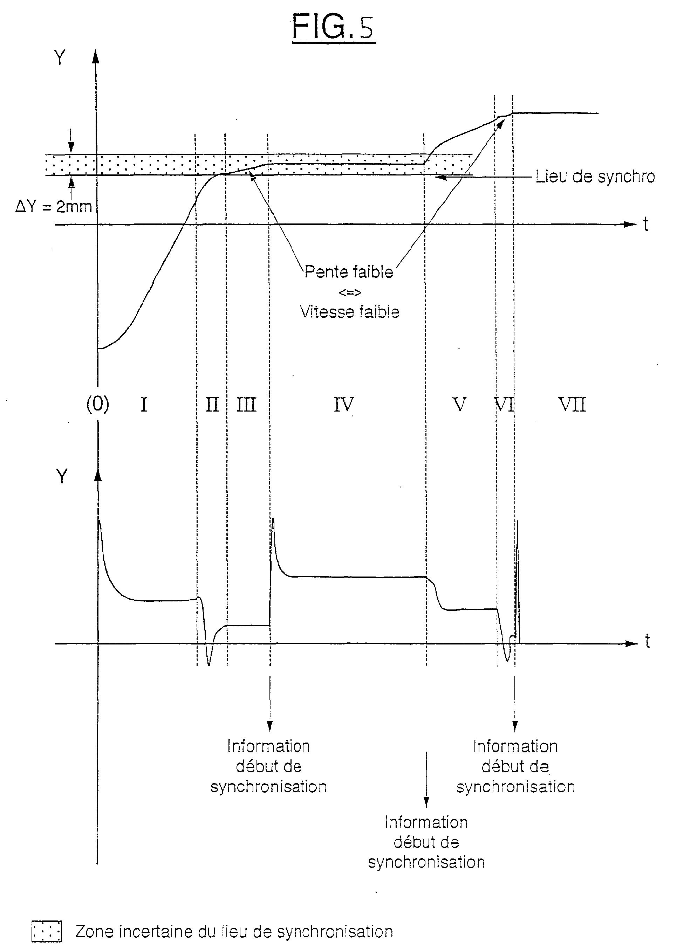

Les courbes illustrées sur la figure 5 ont en abscisse le temps et en ordonnée pour la première la position Y du doigt de commande selon le mouvement de passage, et pour la seconde le courant I₁ consommé par l'actionneur de passage 1. A l'instant zéro, l'unité de commande 11 de la figure 1 reçoit la demande de changement de vitesses avec changement de ligne, autrement dit d'axe de commande.

Lors de la phase I, l'unité de commande 11 impose une consigne de vitesse élevée pour déplacer rapidement le doigt de commande au moyen de l'actionneur de passage 1. Le courant I₁ présente initialement une pointe liée au démarrage, puis se stabilise autour d'une valeur relativement élevée de façon qu'il entraîne l'axe de commande à la vitesse demandée. Le doigt de commande 3 ne peut pas sortir de son crabot de fourchette. Le mouvement de l'actionneur de sélection 2 est bloqué.

Au cours de la phase II, l'axe de commande entraîné par le doigt de commande 3 approche de la zone de synchronisation. Du fait de l'usure des pièces et des tolérances de fabrication, le lieu du début de cette zone est incertain. L'unité de commande 11 commande un fort ralentissement de l'axe de commande avant son entrée dans cette zone. Le but est de rendre la synchronisation possible sans forcer. L'actionneur 1 est freiné, le courant I₁ peut devenir négatif pendant une courte période. La vitesse de l'axe de commande décroît et devient inférieure à la vitesse d'accostage maximum prédéterminée, par exemple de l'ordre de 0,2 m∗s⁻¹. En phase III, l'unité de commande 11 impose un déplacement à vitesse constante, par exemple de l'ordre de 0,2 m∗s⁻¹ jusqu'au début de synchronisation.

En phase IV, l'axe de commande s'immobilise par exemple au contact de l'interdicteur de l'anneau de synchro. A cet instant précis, le courant I₁ augmente brusquement. On considère qu'il s'agit de l'instant de début de synchronisation. L'actionneur 1 est alors piloté au couple maximal autorisé pour la synchronisation.

En phase V, la synchronisation est terminée et l'axe de commande avance à nouveau. L'actionneur 1 peut à nouveau se déplacer. Toutefois, les différentes inerties font que le courant I₁ reste à une valeur relativement élevée. Dans les premiers instants de la phase 5, le courant I₁ ne varie pas beaucoup. Par contre, la tension U₁ aux bornes de l'actionneur 1 augmente fortement. Cette augmentation de tension est considérée comme étant la fin de la synchronisation. La variation de la tension U₁ est donc utilisée pour déterminer la fin au sens temporel de la synchronisation. L'unité de commande 11 impose alors une vitesse élevée.

En phase VI, l'axe de commande approche d'une butée de fin de course. En d'autres termes, la variable Y approche une valeur maximale prédéterminée, par exemple de l'ordre de 10 mm. L'unité de commande 11 impose alors une consigne de vitesse faible afin de réduire le choc à l'accostage. Le courant I₁ diminue fortement et peut devenir négatif pendant quelques instants.

En phase VII, l'axe de commande est arrivé en butée, le déplacement de l'actionneur 1 est bloqué. Le courant I₁ augmente brusquement. Le changement de rapport de vitesses est considéré comme terminé. L'unité de commande 11 impose un courant I₁ nul.

A titre d'exemple, on a illustré dans le tableau ci-dessous des exemples de consigne lors des différentes phases illustrées sur la figure 4.

| Phase | Consigne | Valeur | Y min. | Y max. |
|---|---|---|---|---|
| I & II | vitesse | 1 m/s | - 10,5 | 2 |
| III | vitesse | 0,35 m/s | 2 | 2,5 |
| IV | couple | 1 Nm | 2,5 | 2,5 |
| V | vitesse | 1 m/s | 2,5 | 10 |
| VI | vitesse | 0,15 m/s | 10 | 10,5 |

Ainsi, on prévoit de doter au moins l'actionneur de passage d'un moyen de mesure du courant I₁ qu'il consomme et d'envoyer une information de courant mesuré à l'unité de traitement. Le moyen de mesure du courant peut être un capteur monté sur un actionneur proprement dit, ou sur une alimentation électrique de l'actionneur. L'information de courant mesuré peut être fournie par l'alimentation électrique pourvue d'une sortie à cet effet. L'unité de traitement ou calculateur analyse l'information de courant mesuré relative à chaque actionneur pour en déduire la phase de synchronisation. Plus précisément, l'instant de début de la phase de synchronisation est indiqué par un pic du courant I₁ et l'instant de fin de la phase de synchronisation peut être indiqué par un pic de la tension U₁ ou de sa dérivée temporelle d U₁/dt.

Grâce à l'invention, on effectue une précommande de l'actionneur de sélection durant la phase de décrabotage, ce qui permet de diminuer la durée de la phase active dudit actionneur. On effectue également une précommande de l'actionneur de passage durant la phase de sélection, afin de diminuer la durée du mouvement dudit actionneur de passage.

On utilise l'information du courant consommé par les actionneurs ou éventuellement d'une autre variable électromagnétique pour commander de manière optimale la sélection et l'engagement et repérer l'instant de passage au point mort. Cet instant de passage au point mort se traduit par un blocage de l'actionneur de passage, d'où un pic du courant qu'il consomme et une libération de l'actionneur de sélection, d'où une chute du courant qu'il consomme lorsqu'on lui applique auparavant une consigne d'appliquer une légère précontrainte. On peut ainsi, à partir de la détection de l'instant de passage au point mort, commander de façon optimale d'un point de vue temporel, la suite des étapes de changement de vitesses, ce qui permet de réduire la durée totale d'un changement de vitesses impliquant un changement d'axe de commande, autrement dit de baladeur.

On peut également repérer la phase de synchronisation indépendamment de l'usure et des dispersions de fabrication. Enfin, on utilise ces informations pour piloter au moins un actionneur sous forme de machine d'état. Le pilotage est auto étalonné et s'adapte en permanence au cours de la durée de vie de la boîte de vitesses.

## Revendications

1. Dispositif de commande d'une boîte de vitesses mécanique pourvue d'au moins deux arbres et de pièces mobiles pour engager les différents rapports de transmission, comprenant un moyen de passage de vitesses (1) alimenté en énergie électrique, un moyen de sélection des vitesses (2) alimenté en énergie électrique, et une unité de commande (11) desdits moyens, **caractérisé par le fait qu'**il comprend un moyen de détection d'une variable Cₚ représentative d'un effort exercé par le moyen de passage, un moyen de détection d'une variable Cₛ représentative d'un effort exercé par le moyen de sélection, un moyen de calcul de la position d'un doigt de commande de pièces mobiles à partir desdites variables Cₚ et Cₛ et un moyen d'actionnement simultané du moyen de passage et du moyen de sélection.

2. Dispositif selon la revendication 1, **caractérisé par le fait que** la variable Cₚ est un courant électrique consommé par le moyen de passage et que la variable Cₛ est un courant électrique consommé par le moyen de sélection.

3. Boîte de vitesses comprenant un dispositif selon l'une quelconque des revendications précédentes.

4. Procédé de commande d'une boîte de vitesses mécanique pourvue d'au moins deux arbres et de pièces mobiles pour engager les différents rapports de transmission, dans lequel:
on détecte une variable Cₚ représentative d'un effort exercé par un moyen de passage de vitesses,
on détecte une variable Cₛ représentative d'un effort exercé par un moyen de sélection des vitesses,
on calcule la position d'un doigt de commande de pièces mobiles à partir desdites variables Cₚ et Cₛ, et
on actionne simultanément le moyen de passage et le moyen de sélection pour diminuer la durée d'un changement d'un rapport de vitesses à un autre.

5. Procédé selon la revendication 4, dans lequel la variable Cₚ est un courant électrique consommé par le moyen de passage et la variable Cₛ est un courant électrique consommé par le moyen de sélection.

6. Procédé selon l'une quelconque des revendications 4 ou 5, dans lequel l'actionnement simultané du moyen de passage et du moyen de sélection a lieu lors d'un changement d'un rapport de vitesses requérant le passage d'une fourchette au point mort.

7. Procédé selon l'une quelconque des revendications 4 à 6, dans lequel l'actionnement simultané du moyen de passage et du moyen de sélection a lieu lors d'une phase de décrabotage.

8. Procédé selon l'une quelconque des revendications 4 à 7, dans lequel l'actionnement simultané du moyen de passage et du moyen de sélection a lieu lors d'une phase de sélection.

9. Programme de commande comprenant des moyens de code programme pour mettre en oeuvre les étapes du procédé selon l'une quelconque des revendications 4 à 8, lorsque ledit programme fonctionne sur une unité de commande.

10. Support capable d'être lu par un dispositif de lecture de moyens de code programme qui s'y trouvent stockés et qui sont aptes à la mise en oeuvre des étapes du procédé selon l'une quelconque des revendications 4 à 8.

11. Dispositif de commande d'une boîte de vitesses mécanique pourvue d'au moins deux arbres et de pièces mobiles pour engager les différents rapports de transmission, comprenant un moyen de passage de vitesses (1) alimenté en énergie électrique, un moyen de sélection de vitesses (2) alimenté en énergie électrique, une unité de commande (11) desdits moyens, un moyen de détermination d'un état de la boîte de vitesses à partir d'informations relatives à la variation de variables électromagnétiques des moyens d'actionnement, et un moyen d'estimation de la position d'au moins une pièce mobile à partir de la variation desdites variables électromagnétiques, **caractérisé par le fait qu'**il comprend un moyen pour diminuer la vitesse de déplacement d'au moins une pièce mobile dans la zone de fin de course.

12. Dispositif selon la revendication 11, **caractérisé par le fait qu'**il comprend un capteur du courant (9,10) consommé par chaque actionneur, et un capteur de la tension aux bornes de chaque actionneur, lesdits capteurs étant reliés à l'unité de commande.

13. Boîte de vitesses comprenant un dispositif selon la revendication 11 ou 12.

14. Procédé de commande d'une boîte de vitesses pourvue d'au moins deux arbres, de pièces mobiles pour engager les différents rapports de transmission, et de moyens d'actionnement desdites pièces mobiles, dans lequel:
• on détermine un état de la boîte de vitesses à partir d'informations relatives à la variation de variables électromagnétiques des moyens d'actionnement,
• on estime la position d'au moins une pièce mobile à partir de la variation desdites variables électromagnétiques, et
• on diminue la vitesse de déplacement d'au moins une pièce mobile dans une zone de fin de course.

15. Procédé selon la revendication 14, dans lequel on diminue la vitesse de déplacement d'au moins une pièce mobile dans une zone de synchronisation.

16. Procédé selon l'une quelconque des revendications 14 ou 15, dans lequel lors d'un déplacement d'un axe de commande de pièce mobile dans une zone de synchronisation, une augmentation brusque du courant consommé par un moyen d'actionnement de sélection correspond au début d'une phase de synchronisation.

17. Procédé selon l'une quelconque des revendications 14 à 16, dans lequel après ladite augmentation brusque du courant, une augmentation brusque de la tension aux bornes du moyen d'actionnement de sélection correspond à la fin de la phase de synchronisation.

18. Procédé selon l'une quelconque des revendications 14 à 17, dans lequel lors d'un déplacement d'un axe de commande de pièce mobile dans une zone de fin de course, une augmentation brusque du courant consommé par un moyen d'actionnement de sélection correspond à la fin du déplacement.

19. Procédé selon l'une quelconque des revendications 14 à 18, dans lequel on diminue la vitesse de déplacement d'au moins une pièce mobile dans une zone de fin de course.

20. Programme de commande comprenant des moyens de code programme pour mettre en oeuvre les étapes du procédé selon l'une quelconque des revendications 14 à 19, lorsque ledit programme fonctionne sur une unité de commande.

21. Support capable d'être lu par un dispositif de lecture de moyens de code programme qui s'y trouvent stockés et qui sont aptes à la mise en oeuvre des étapes du procédé selon l'une quelconque des revendications 14 à 19.
